# EUROPÄISCHE PATENTANMELDUNG

(11) **EP 1 745 914 A2**
(43) Veröffentlichungstag der Anmeldung: **24.01.2007**
(21) Anmeldenummer: 06116751.6
(22) Anmeldetag: 06.07.2006
(51) Int. Cl.: B29C 65/00, B29C 70/08, B64C 3/18

(54) **Verbundstruktur und Verfahren zur Herstellung einer Verbundstruktur**

(30) Priorität: 19.07.2005 DE 102005034621
(71) Anmelder: DLR Deutsches Zentrum für Luft- und Raumfahrt e.V., 51147 Köln (DE)
(72) Erfinder: Keck, Rüdiger, 74081 Heilbronn (DE); Kempe, Günter, 70180 Stuttgart (DE); Kocian, Frank, 48165 Münster (DE)
(74) Vertreter: Hoeger, Stellrecht & Partner Patentanwälte

(57) **Zusammenfassung**

Verbundstruktur, umfassend ein erstes Bauteil aus einem Faserverbundwerkstoff mit thermoplastischer Matrix und mindestens ein weiteres zweites Bauteil aus einem Faserverbundwerkstoff mit thermoplastischer Matrix, welches mit dem ersten Bauteil verbunden ist, wobei das zweite Bauteil einen Tragebereich aus mit Endlosfasern verstärktem Werkstoff und einen Flanschbereich aus kurzfaserverstärktem Werkstoff umfasst und über den Flanschbereich mit dem ersten Bauteil verbunden ist.

## Beschreibung

Die Erfindung betrifft eine Verbundstruktur, umfassend ein erstes Bauteil aus einem Faserverbundwerkstoff mit thermoplastischer Matrix und mindestens ein weiteres zweites Bauteil aus einem Faserverbundwerkstoff mit thermoplastischer Matrix, welches mit dem ersten Bauteil verbunden ist.

Die Erfindung betrifft ferner ein Verfahren zur Herstellung einer Verbindung zwischen einem ersten Bauteil aus einem Faserverbundwerkstoff mit thermoplastischer Matrix und einem zweiten Bauteil aus einem Faserverbundwerkstoff.

Aus der WO 94/01271 A1 ist ein Kunststoff-Verbundprofil, insbesondere Flügelholm für den Flugzeugbau und Windkraftrotoren, bekannt, welches aus einem mit Verklebeflanschen versehenen Gurt, einem zweiten Gurt und einem die Gurte verbindenden und in die Verklebeflansche eingesetzten Steg besteht. Die Gurte sind aus harzgetränkten Rovings und der Steg aus harzgetränkten Geweben oder Gelegen aufgebaut. Die Gurte und Stege sind durch Verklebung miteinander verbunden. Die Gurte sind pultriert und auch der zweite Gurt ist mit Verklebeflanschen versehen, wobei der Steg in die Verklebeflansche beider Gurte eingesetzt ist und mittels eines thixotropen Klebstoffs darin fixiert ist.

Aus der DE 198 48 516 A1 ist ein Hohlkammer-Leichtbauteil bekannt, welches aus einem schalenförmigen Gehäuseteil aus hochfestem Werkstoff und einer gerippten Stützstruktur aus Kunststoff besteht. Die Stützstruktur liegt auf der Innenseite des Gehäuseteils an und ist mit dem Gehäuseteil verbunden. Ferner ist eine Deckplatte oder Deckelschale aus einem hochfesten Werkstoff vorgesehen, die den aus Gehäuseteil und Stützstruktur gebildeten Raum weitgehend abdeckt und in ihrem Randbereich mit einem Teil der Umrandung des Gehäuses verbunden ist.

Der Erfindung liegt die Aufgabe zugrunde, eine Verbundstruktur der oben genannten Art bereitzustellen, welche sich auf einfache Weise herstellen lässt.

Die Aufgabe wird bei der genannten Verbundstruktur erfindungsgemäß dadurch gelöst, dass das zweite Bauteil einen Tragebereich aus mit Endlosfasern verstärktem Werkstoff und einen Flanschbereich aus kurzfaserverstärktem Werkstoff umfasst und über den Flanschbereich mit dem zweiten Bauteil verbunden ist.

Durch den Tragebereich mit Endlosfaserverstärkung lässt sich eine stabile Struktur bereitstellen, in welche sich Kräfte einleiten lassen, wobei der Tragebereich bei Kräfteeinleitung parallel zur Faserrichtung hohe Kräfte aufnehmen kann. Die Verbindung mit dem ersten Bauteil erfolgt über den Flanschbereich. Der Flanschbereich ist aus kurzfaserverstärktem Werkstoff mit thermoplastischer Matrix hergestellt, wobei unter Kurzfasern hier Fasern mit einer Länger kleiner 50 mm und insbesondere kleiner 3 mm verstanden werden. Das Material des kurzfaserverstärkten Werkstoffs kann unter Erwärmung lokal zum Fließen gebracht werden. Weiterhin lässt sich eine Kontaktflächenaufschmelzung für das erste Bauteil und zweite Bauteil erreichen, um die Verbindung herzustellen. Dadurch lässt sich eine Schweißverbindung zwischen dem zweiten Bauteil und dem ersten Bauteil erreichen, welche porenfrei und dicht ist. Es lässt sich eine flächige Verbindung über einen großen Bereich auf einfache Weise herstellen.

Durch die Fließfähigkeit des Materials des Flanschbereichs lassen sich Spalte zwischen dem ersten Bauteil und dem zweiten Bauteil überbrücken, um eine porenfreie Verbindung zu erreichen, ohne dass eine exakte Anpassung der Bauteile aneinander notwendig ist. Insbesondere lassen sich auch gekrümmte Bauteile miteinander verbinden.

Erfindungsgemäß lässt sich eine Verbundstruktur bereitstellen, welche auf einfache und kostengünstige Weise herstellbar ist.

Insbesondere ist der Tragebereich plattenförmig ausgebildet. Dadurch lässt sich auf einfache Weise beispielsweise eine Verstärkungsrippe ausbilden.

Vorteilhafterweise sind die Fasern im Tragebereich mindestens näherungsweise parallel zu einer Oberfläche des Tragebereichs orientiert. Dadurch lässt sich in der Faserorientierungsrichtung eine hohe Biegesteifigkeit bzw. hohe Membransteifigkeit erreichen. Dadurch ist auf einfache Weise eine Ausbildung als Verstärkungsrippe erreicht.

Insbesondere sind Fasern im Tragebereich mindestens näherungsweise parallel zueinander orientiert. Dadurch lassen sich hohe Kräfte parallel zur Faserorientierungsrichtung einleiten. Es können dabei mehrere Faserorientierungsrichtungen vorgesehen sein. Beispielsweise können senkrechte zu einander liegende Faserorientierungsrichtungen vorgesehen sein.

Günstig ist es auch, wenn das erste Bauteil aus mit Endlosfasern verstärktem Werkstoff hergestellt ist. Dadurch lässt sich eine hohe Stabilität erreichen. Die Stabilität lässt sich in Richtungen, welche nicht Faserorientierungsrichtungen sind, durch Verstärkungsrippen, gebildet über das mindestens eine weitere zweite Bauteil, erreichen.

Das erste Bauteil weist eine hohe Stabilität auf, wenn die Endlosfasern mindestens näherungsweise parallel zu einer Oberfläche des ersten Bauteils orientiert sind.

Aus dem gleichen Grund ist es günstig, wenn Endlosfasern mindestens näherungsweise parallel zueinander liegen.

Günstig ist es, wenn der Flanschbereich und der Tragebereich das gleiche thermoplastische Matrixmaterial aufweisen, mindestens in dem Sinne, dass die Matrixmaterialien miteinander verträglich sind. Dadurch lassen sich diese auf einfache Weise miteinander verbinden. Insbesondere lassen sich diese thermisch miteinander verschweißen.

Eine innige Verbindung zwischen dem ersten Bauteil und dem zweiten Bauteil lässt sich erreichen, wenn der Flanschbereich und das erste Bauteil das gleiche thermoplastische Matrixmaterial aufweisen, mindestens in dem Sinne, dass die Matrixmaterialien miteinander verträglich sind. Dadurch lässt sich auf einfache Weise eine Schweißverbindung herstellen.

Ganz besonders vorteilhaft ist es, wenn der Flanschbereich eine Stirnseite des Tragebereichs, welche dem ersten Bauteil zugewandt ist, umgibt. Dadurch lässt sich eine stabile Verbindung zwischen dem Flanschbereich und dem Tragebereich erreichen. Weiterhin lässt sich genügend Material für den Tragebereich bereitstellen, um bei der Verbindungsherstellung durch Fließen des Materials des Flanschbereichs Spalte zwischen dem ersten Bauteil und dem zweiten Bauteil füllen zu können.

Günstig ist es, wenn eine Stirnseite des Tragebereichs zu dem ersten Bauteil durch den Flanschbereich abgedeckt ist. Dadurch wird ein Materialbereich (Materialüberstand) bereitgestellt, über den sich während des Herstellungsverfahrens über Fließen eine stabile, dichte und porenfreie Verbindung zwischen dem ersten Bauteil und dem zweiten Bauteil erreichen lässt.

Insbesondere weist der Flanschbereich einen Verbindungsbereich zu einem ersten Bauteil auf, welcher größere Breitenabmessungen aufweist als die Stirnseite des Tragebereichs. Dadurch wird eine größere Verbindungsfläche bereitgestellt, über welche das zweite Bauteil mit dem ersten Bauteil verbindbar ist. Dadurch wird die Stabilität der Verbindung verbessert.

Günstig ist es, wenn der Flanschbereich eine Ausnehmung aufweist, in welcher der Tragebereich sitzt. Dadurch lässt sich der Flanschbereich auf einfache Weise an dem Tragebereich fixieren. Der Tragebereich kann dabei mit dem Flanschbereich in der Ausnehmung sitzend verschweißt sein.

Insbesondere ist die Ausnehmung zwischen parallel gegenüberliegenden Wänden gebildet. Dadurch lässt sich auf einfache Weise der Flanschbereich an einem plattenförmigen Tragebereich fixieren.

Es kann vorgesehen sein, dass die Breite des Flanschbereichs parallel zu einer Dickenrichtung des Tragebereichs von dem ersten Bauteil weg abnimmt. Dadurch lässt sich ein Flanschbereich mit einem großen Verbindungsbereich zu dem ersten Bauteil bilden, wobei sich Kräfte von dem Flanschbereich effektiv in den Tragebereich einleiten lassen.

Beispielsweise weist der Flanschbereich eine mindestens näherungsweise trapezförmige Außenkontur auf. Es sind aber auch anderen Außenkonturen möglich.

Es kann vorgesehen sein, dass der Flanschbereich an einem Ende zu dem Tragebereich stufenförmig ausgebildet ist. Dadurch läuft der Flanschbereich zu dem Tragebereich nicht in einem spitzen Winkel "auf Null" aus, sondern läuft stumpf auf. Ein Auslaufbereich mit spitzem Auslaufen wäre durch Umspritzen nicht exakt herstellbar.

Der Faseranteil im Flanschbereich ist (gewichtsbezogen) vorzugsweise kleiner als 40 % und insbesondere kleiner als 30 %. Dadurch lässt sich bei Erwärmung (beispielsweise während Widerstandsschweißung) das Material des Flanschbereichs fließfähig machen und es lassen sich Spalte zwischen dem ersten Bauteil und dem zweiten Bauteil ausfüllen.

Eine hohe Verbindungsfestigkeit lässt sich erreichen, wenn der Flanschbereich bezüglich des Verbindungsbereichs mit dem ersten Bauteil durchgängig ist, d. h. keine Lücken aufweist.

Aus dem gleichen Grund ist es günstig, wenn sich der Flanschbereich über eine ganze Verbindungsseite zur Verbindung des zweiten Bauteils mit dem ersten Bauteil erstreckt. Dadurch lässt sich eine flächige Verbindung sowohl in der Breite als auch in der Längskontur einer Stirnseite des Tragebereichs mit dem ersten Bauteil erreichen.

Insbesondere sind das erste Bauteil und das zweite Bauteil über den Flanschbereich passgenau miteinander verbunden. Diese Passgenauigkeit bewirkt eine porenfreie Verbindung zwischen dem ersten Bauteil und dem zweiten Bauteil. Bei der erfindungsgemäßen Lösung muss diese Passgenauigkeit nicht durch passgenaue Bearbeitung des zweiten Bauteils hergestellt werden, sondern durch die Fließfähigkeit des Materials des Flanschbereichs lässt sich diese "ad hoc" während des Herstellungsverfahrens bewirken.

Es kann vorgesehen sein, dass in einem Verbindungsbereich zwischen dem ersten Bauteil und dem zweiten Bauteil eine Wärmeverteilungseinrichtung angeordnet ist. Diese Wärmeverteilungseinrichtung dient als Schweißhilfe, um einen gleichförmigen Wärmeeintrag insbesondere in den Flanschbereich zu erhalten. Dadurch wird, auch wenn der Flanschbereich nicht genau an das erste Bauteil angepasst ist, eine gleichmäßige lokale Erwärmung im Verbindungsbereich und damit eine gleichmäßige Bewirkung der Fließfähigkeit im Flanschbereich erreicht. Weiterhin lässt sich die Wärmeenergie über die Wärmeverteilungseinrichtung gezielt von außen in den relevanten Bereich einbringen. Dadurch wiederum lässt sich eine stabile und dichte Verbindung erreichen. Die Wärmeverteilungseinrichtung, welche beispielsweise in Form eine Wärmeverteilungsschicht ausgebildet ist und/oder Fasern umfasst (beispielsweise in Form eines Fasergewebes oder in Form von unidirektionalen Fasern), verbleibt nach der Herstellung der Schweißverbindung in der Verbundstruktur.

Insbesondere ist die Wärmeverteilungseinrichtung durch ein oder mehrere metallische Elemente oder durch Fasern gebildet.

Die Wärmeverteilungseinrichtung kann durch ein oder mehrere Gitter und insbesondere metallische Gitter gebildet sein.

Es ist möglich, dass der Flanschbereich auf den Tragebereich mindestens teilweise aufgespritzt ist.

Es ist auch möglich, dass der Flanschbereich getrennt hergestellt wird und auf den Tragebereich aufgepresst ist.

Um eine gute Verbindung zwischen dem Flanschbereich und dem Tragebereich zu erreichen, sind diese vorteilhafterweise miteinander verschweißt. Dies kann durch entsprechende Erwärmung erreicht werden.

Günstig ist es, wenn der Flanschbereich einen oder mehrere Anschlüsse zur Verbindung mit einem oder mehreren Bauteilen aufweist. Ein Beispiel eines solchen Anschlusses ist ein Insert, welches bei der Herstellung des Flanschbereichs integral hergestellt wird. In ein solches Insert lässt sich beispielsweise ein Nietenband einbringen. Beispielsweise wird auch ein Insert mit einem Gewinde ausgebildet, um einen Gewindeanschluss zu ermöglichen.

Günstig ist es, wenn der Flanschbereich an jeder Stelle breiter ist als der Tragebereich mindestens dort, wo der Tragebereich und der Flanschbereich miteinander verbunden sind. Dadurch wird zum einen eine große Verbindungsfläche zur Verbindung des zweiten Bauteils mit dem ersten Bauteil hergestellt. Weiterhin lassen sich Kräfte von dem zweiten Bauteil über den Flanschbereich in den Tragebereich unter minimaler Belastung des Flanschbereichs einleiten.

Insbesondere umgreift der Flanschbereich den Tragebereich. Dadurch lässt sich dieser auf sichere und stabile Weise an dem Tragebereich fixieren. Weiterhin lassen sich effektiv Kräfte über den Flanschbereich in den Tragebereich einleiten.

Bei einer Ausführungsform ist es vorgesehen, dass das erste Bauteil schalenförmig ausgebildet ist.

Günstig ist es dann, wenn das zweite Bauteil eine Verstärkungsrippe oder Teil einer Verstärkungsrippe ist. Es können mehrere solche Verstärkungsrippen vorgesehen sein. Durch die Verstärkungsrippen zwischen gegenüberliegenden Schalenwänden lässt sich die Stabilität der entsprechenden Verbundstruktur erhöhen.

Ein Beispiel für eine erfindungsgemäße Verbundstruktur ist ein Slat. Es handelt sich dabei um einen Vorflügel, welcher als Auftriebshilfe für einen Flugkörper dient.

Der Erfindung liegt ferner die Aufgabe zugrunde, ein Verfahren der eingangs genannten Art bereitzustellen, welches auf einfache Weise durchführbar ist.

Diese Aufgabe wird bei dem eingangs genannten Verfahren erfindungsgemäß dadurch gelöst, dass das zweite Bauteil mit einem Flanschbereich aus kurzfaserverstärktem Werkstoff mit thermoplastischer Matrix versehen wird und der Flanschbereich mit dem ersten Bauteil durch Schweißen verbunden wird.

Das erfindungsgemäße Verfahren weist die bereits im Zusammenhang mit der erfindungsgemäßen Verbundstruktur erläuterten Vorteile auf.

Weitere vorteilhafte Ausgestaltungen des erfindungsgemäßen Verfahrens wurden ebenfalls bereits im Zusammenhang mit der erfindungsgemäßen Verbundstruktur erläutert.

Insbesondere wird der Flanschbereich an einem plattenförmigen Bereich aus endlosfaserverstärktem Werkstoff angeordnet. Durch den endlosfaserverstärkten Werkstoff lassen sich in den Tragebereich hohe Kräfte einleiten. Der Flanschbereich dient im wesentlichen nur zur Verbindung mit dem ersten Bauteil.

Es kann vorgesehen sein, dass der Flanschbereich mindestens teilweise aufgespritzt wird oder aufgepresst wird. Auch andere Verbindungsarten bzw. Herstellungsarten des Flanschbereichs sind möglich.

Zur Herstellung der Verbindung wird vorzugsweise das zweite Bauteil mit dem Flanschbereich gegen das erste Bauteil gepresst. Wenn das Material des Flanschbereichs in der für die Verbindung relevantesten Zone fließfähig ist, dann lässt sich durch das Anpressen eine dichte Verbindung zwischen dem zweiten Bauteil und dem ersten Bauteil herstellen. Spalte zwischen dem ersten Bauteil und dem zweiten Bauteil lassen sich durch das kurzfaserverstärkte Material "ausfüllen". Durch das Anpressen wird für eine automatische Konturanpassung gesorgt. Dadurch muss der Flanschbereich nicht passgenau bezüglich des ersten Bauteils hergestellt werden, sondern die passgenaue Verbindung erfolgt über das Anpressen des zweiten Bauteils in fließfähigem Zustand des kurzfaserverstärkten Materials des Flanschbereichs.

Günstig ist es, wenn zwischen dem ersten Bauteil und dem zweiten Bauteil eine Wärmeverteilungseinrichtung positioniert ist. Diese Wärmeverteilungseinrichtung dient als Schweißhilfe und sorgt für eine gleichmäßige Wärmeverteilung und optimierten Wärmeeintrag von außen. Dadurch lässt sich auch bei nicht passgenauer Ausbildung des Flanschbereichs und des ersten Bauteils eine passgenaue Verbindung erreichen.

Insbesondere ist die Wärmeverteilungseinrichtung flexibel ausgebildet. Vorzugsweise ist sie formerhaltend flexibel ausgebildet. Dadurch lässt sie sich an die Kontur des ersten Bauteils anpassen.

Zur Herstellung der Schweißverbindung wird das erste Bauteil und/oder das zweite Bauteil zum Verschweißen der beiden Bauteile vorzugsweise lokal erwärmt. Die Erwärmung kann direkt oder indirekt sein.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausschnitts aus einem Ausführungsbeispiel einer erfindungsgemäßen Verbundstruktur;
- Figur 2: eine schematische Schnittansicht eines Ausführungsbeispiels eines Bauteils mit einem Flanschbereich;
- Figur 3: schematisch einen Teilschritt bei einem Ausführungsbeispiel des erfindungsgemäßen Verfahrens;
- Figur 4: perspektivisch ein Slat in einer Experimentalversion als Ausführungsbeispiel einer erfindungsgemäßen Verbundstruktur; und
- Figur 5: eine Schnittansicht des Slats gemäß Figur 4.

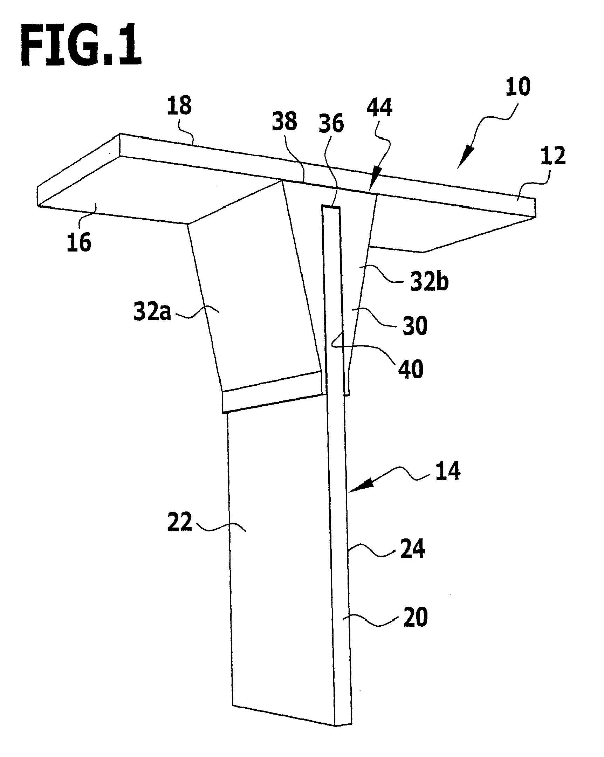

Ein Ausführungsbeispiel einer erfindungsgemäßen Verbundstruktur, welches in Figur 1 gezeigt und dort mit 10 bezeichnet ist, umfasst ein erstes Bauteil 12 und als weiteres Bauteil ein zweites Bauteil 14, wobei die beiden Bauteile 12 und 14 miteinander verbunden sind. Es kann noch ein drittes Bauteil, viertes Bauteil usw. vorgesehen sein, welche jeweils mit dem ersten Bauteil 12 verbunden sind. Es ist grundsätzlich auch möglich, dass ein oder mehrere weitere Bauteile mit dem zweiten Bauteil 14 verbunden sind.

Das erste Bauteil 12 ist aus einem Faserverbundwerkstoff (CFK) mit thermoplastischer Matrix hergestellt. Ein Beispiel für ein thermoplastisches Matrixmaterial ist PEEK.

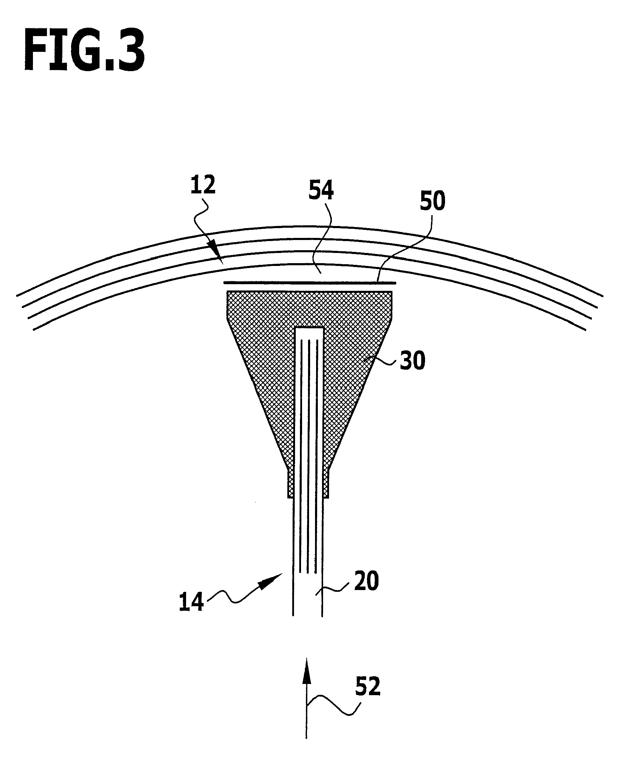

Das erste Bauteil 12 ist durch Endlosfasern verstärkt (vgl. Figur 3). Als Endlosfasern werden Fasern bezeichnet, die in der Form von Rovings oder Geweben verarbeitet werden und deren Länge konstruktionsbedingt ist oder durch die geometrische Abmessung des Bauteils bedingt ist. (Unter Kurzfasern werden hier Fasern mit einer Länge bis 50 mm verstanden.)

Die Endlosfasern im ersten Bauteil 12 sind mindestens näherungsweise parallel zu einer ersten Oberfläche 16 und einer gegenüberliegenden zweiten Oberfläche 18 des ersten Bauteils 12 orientiert. Fasern im Bauteil 12 sind mindestens näherungsweise parallel zueinander orientiert. Es können dabei beispielsweise Querorientierungen und insbesondere Senkrechtorientierungen von Fasern relativ zueinander vorgesehen sein.

Das erste Bauteil 12 kann gekrümmt ausgebildet sein und beispielsweise schalenförmig ausgebildet sein. Bei dem in Figur 3 gezeigten Beispiel ist das erste Bauteil 12 gekrümmt gezeigt.

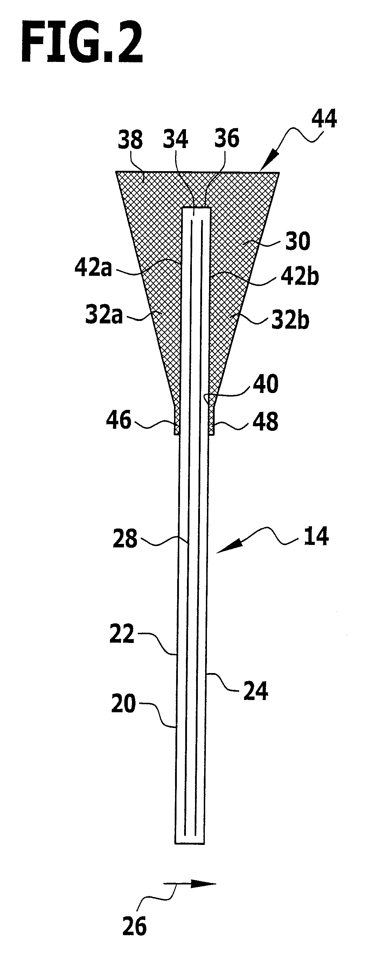

Das zweite Bauteil 14 (Figuren 1 und 2) ist ebenfalls aus einem Faserverbundwerkstoff mit thermoplastischer Matrix hergestellt. Es umfasst einen Tragebereich 20, welcher insbesondere plattenförmig ausgestaltet ist mit einer ersten Oberfläche 22 und einer parallel gegenüberliegenden zweiten Oberfläche 24. Zwischen diesen beiden Oberflächen 22 und 24 erstreckt sich der Tragebereich 20 mit einer Dickenrichtung 26.

Der Werkstoff des Tragebereichs 20 umfasst Endlosfasern 28, welche mindestens näherungsweise parallel zur ersten Oberfläche 22 und zur zweiten Oberfläche 24 orientiert sind. Fasern im Tragebereich 20 sind mindestens näherungsweise parallel zueinander ausgerichtet. Beispielsweise sind Fasern mit einer ersten Orientierung und Fasern mit einer zweiten Orientierung quer und insbesondere senkrecht zur ersten Orientierung vorgesehen.

Der Tragebereich 20 dient beispielsweise dazu, Verstärkungsrippen auszubilden.

An dem Tragebereich 20 ist ein Flanschbereich 30 angeordnet, welcher aus einem kurzfaserverstärkten Werkstoff hergestellt ist. Das Matrixmaterial des Flanschbereichs 30 ist dabei das gleiche Matrixmaterial wie das des Tragebereichs 20 sowie das des ersten Bauteils 12.

Der Faseranteil der Kurzfasern im Flanschbereich 30 ist (gewichtsbezogen) kleiner als 40 % und insbesondere kleiner als 30 %.

Der Flanschbereich 30 umgreift mit einem ersten Schenkel 32a und einem zweiten Schenkel 32b den Tragebereich 20 an einem Ende 34 dieses Tragebereichs 20, welches dem ersten Bauteil 12 zugewandt ist. Dadurch umgibt der Flanschbereich 30 eine Stirnseite 36 des Tragebereichs 20, welche dem ersten Bauteil 12 zugewandt ist.

Der Flanschbereich 30 weist einen Materialbereich 38 auf, welcher zwischen dem ersten Bauteil 12 und der Stirnseite 36 des Tragebereichs 20 liegt. Dieser Materialbereich 38 deckt die Stirnseite 36 zu dem ersten Bauteil 12 hin ab.

Der Flanschbereich 30 hat eine schlitzförmige Ausnehmung 40, in welcher der Tragebereich 20 sitzt. Die Ausnehmung 40 weist beispielsweise gegenüberliegende parallel beabstandete Wände 42a, 42b auf, zwischen welchen der Tragebereich 20 verbunden mit diesen Wänden 42a, 42b sitzt. Es kann auch eine Verjüngung zur Stirnseite 36 vorgesehen sein, um Spannungsspitzen zu verringern.

Beispielsweise ist der Flanschbereich 30 mit dem Tragebereich 20 verschweißt.

Der Flanschbereich 30 lässt sich auf dem Tragebereich 20 beispielsweise durch Aufspritzen oder durch Aufpressen anordnen.

Der Flanschbereich 30 hat einen Verbindungsbereich 44 zur Verbindung mit dem ersten Bauteil 12, wobei der Verbindungsbereich eine Breite in der Dickenrichtung 26 bzw. längs einer Innenkontur des Bauteils 12 hat, welche größer als die entsprechende Breite des Tragebereichs 20 ist. (Dieser Verbindungsbereich 44 kann, abhängig von der Form des ersten Bauteils 12, eben oder gekrümmt sein.) Weiterhin ist die Gesamtfläche des Verbindungsbereichs 44 größer als die Gesamtfläche der Stirnfläche 36.

Bei dem gezeigten Ausführungsbeispiel hat der Flanschbereich 30 eine mindestens näherungsweise trapezförmige Außenkontur. Seine Breite in der Dickenrichtung 26 nimmt von dem ersten Bauteil 12 weg ab.

Der Flanschbereich 30 ist an einem Ende 46 stufenförmig ausgebildet, d. h. die Schenkel 32a, 32b laufen nicht in einem spitzen Winkel auf den Tragebereich 20 aus, sondern weisen einen Bereich 48 auf, welcher in einer Stufe ausläuft. Durch den Bereich 48 weist der Flanschbereich 30 einstückig verbundene Leisten auf, welche einander gegenüberliegen und zwischen welchen der Tragebereich 20 liegt.

Das zweite Bauteil 14 ist mit dem ersten Bauteil 12 über den Flanschbereich 30 durch Schweißung verbunden. Beispielsweise erfolgt die Verbindung über Widerstandsschweißen.

Zwischen dem ersten Bauteil 12 und dem Flanschbereich 30 kann eine Wärmeverteilungseinrichtung wie beispielsweise ein Metallgitter 50 (Figur 3) angeordnet sein, um bei der Verbindung eine gleichmäßige Wärmeverteilung zu erhalten.

Das erfindungsgemäße Verfahren funktioniert wie folgt (Figur 3):

Der Tragebereich 20 wird beispielsweise über Fasergelege hergestellt. Anschließend wird der Flanschbereich 30 an dem Tragebereich 20 angeordnet, beispielsweise durch Aufspritzen oder durch Aufpressen. Durch Erwärmung des Grenzbereichs wird für eine Verbindung und insbesondere Schweißverbindung zwischen dem Flanschbereich 30 und dem Tragebereich 20 in der Ausnehmung 40 gesorgt. (Durch Erwärmung wird das thermoplastische Matrixmaterial des Faserverbundwerkstoffs des Tragebereichs 20 und des Flanschbereichs 30 fließfähig gemacht und angeschmolzen; dadurch lässt sich für eine Verbindung sorgen.)

Das erste Bauteil 12 wird ebenfalls beispielsweise über Fasergelege hergestellt.

Zwischen das erste Bauteil 12 und das zweite Bauteil 14 wird die Wärmeverteilungseinrichtung 50 beispielsweise in Form eines flexiblen Metallgitters oder in Form einer Fasern umfassenden Einrichtung gebracht.

Das erste Bauteil 12 und/oder das zweite Bauteil 14 werden erwärmt. Beispielsweise erfolgt die Erwärmung dadurch, dass Wärme in die Wärmeverteilungseinrichtung 50 eingebracht wird. Durch die Erwärmung wird das thermoplastische Material mit den Kurzfasern des Flanschbereichs 30 im Grenzbereich fließfähig gemacht und angeschmolzen.

Das zweite Bauteil 14 wird gegen das erste Bauteil 12 gedrückt (in Figur 3 angedeutet durch den Pfeil mit dem Bezugszeichen 52). Der Anpressdruck wird eingestellt oder entsprechend gesteuert. Beispielsweise wird ein Pressluftzylinder eingesetzt.

Durch das Anpressen des Flanschbereichs 30 gegen das erste Bauteil 12 lässt sich eine Schweißverbindung erreichen (mit der Wärmeverteilungseinrichtung 50 als Schweißhilfe), welche porenfrei ist. Es lässt sich eine flächige Verbindung herstellen, ohne dass der Flanschbereich 30 passgenau bezüglich der äußeren Kontur des ersten Bauteils 12 hergestellt werden muss. Durch das Fließen des thermoplastischen Materials in Verbindung mit der Kurzfaserverstärkung lässt sich eine "ad-hoc"-Passung erreichen.

Der Materialbereich 38 ist in seinen Abmessungen so gewählt, dass genügend fließfähiges Material bereitsteht, um eine dichte porenfreie Verbindung des zweiten Bauteils 14 mit dem ersten Bauteil 12 beim Anpressen zu erreichen.

Wenn das kurzfaserverstärkte Material des Flanschbereichs 30 fließfähig ist, dann lässt sich dadurch ein Spaltausgleich erreichen. (Ein solcher Spalt, der sich mit kurzfaserverstärktem Material ausfüllen lässt, ist in Figur 3 durch das Bezugszeichen 54 angedeutet.)

Durch das erfindungsgemäßen Verfahren lässt sich über einen großen Flächenbereich eine Schweißverbindung zwischen dem ersten Bauteil 12 und dem zweiten Bauteil 14 herstellen.

Es kann vorgesehen sein, dass bei der Herstellung des Flanschbereichs 30 dieser mit einem oder mehreren Anschlüssen für andere Bauteile, die mit dem zweiten Bauteil 14 zu verbinden sind, hergestellt werden. Beispielsweise werden Inserts integriert.

Die erfindungsgemäße Verbundstruktur 10 lässt sich insbesondere dazu verwenden, schalenförmige Bauteile 12 mit Verstärkungsrippen zu versehen, die über ein oder mehrere Bauteile entsprechend dem zweiten Bauteil 14 gebildet sind.

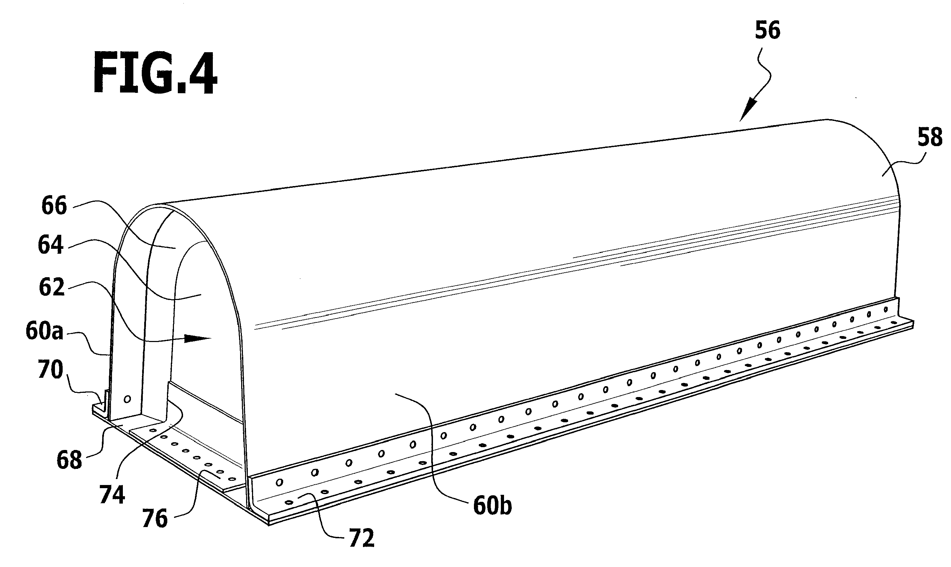

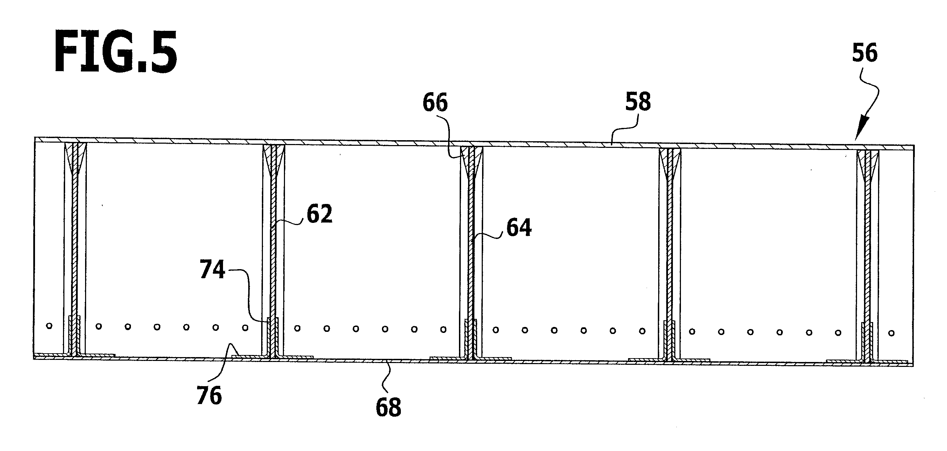

Ein Beispiel für den Einsatz der erfindungsgemäßen Verbundstruktur ist ein Slat. Ein Ausführungsbeispiel eines solchen Slats ist in den Figuren 4 und 5 gezeigt und dort mit 56 bezeichnet. Ein Slat ist ein Vorflügel, welcher an einem Hauptflügel angeordnet ist und als Auftriebshilfe dient.

Der Slat 56 umfasst eine schalenförmige Außenhülle 58 aus einem Faserverbundwerkstoff mit Endlosfasern eingebettet in eine thermoplastische Matrix. Die Außenhülle 58 entspricht dem ersten Bauteil 12. Sie ist gekrümmt ausgebildet mit einander gegenüberliegenden Wandbereichen 60a, 60b. Es sind Verstärkungsrippen 62 vorgesehen, welche die schalenförmige Außenhülle 58 abstützen. Die Verstärkungsrippen 62 sind beabstandet zueinander angeordnet und entsprechen jeweils dem Bauteil 14.

Sie umfassen einen Tragebereich 64 entsprechend dem Tragebereich 20 und einen daran angeordneten Flanschbereich 66 (entsprechend dem Flanschbereich 30), über den sie mit der Außenhülle 58 verbunden sind. Der Flanschbereich 66 ist dabei an die Innenkontur der Außenhülle 58 angepasst.

In einer Experimentalversion für Beschusstests weist der Slat 56 einen Boden 68 auf, welcher die Außenhülle 58 an einer offenen Längsseite abschließt.

Bei der Verbindung der Verstärkungsrippen 62 mit der Außenhülle 58 ist die Außenhülle 58 offen, so dass Verstärkungsrippen 62 gegen die Außenhülle 58 mit einem Anpressdruck gedrückt werden können. Nach der Herstellung der Verbundstruktur 10 wird der Boden 68 fixiert.

Dazu sind beispielsweise ein erstes Nietband 70 und ein zweites Nietband 72 vorgesehen, wobei die beiden Nietbänder 70, 72 jeweils mit der Außenhülle 58 und einem Anlagebereich des Bodens 68 verbunden werden und dadurch eine Verbindung zwischen dem Boden 68 und der Außenhülle 58 hergestellt wird. Die Nietbänder 70, 72 können ebenfalls aus einem Faserverbundwerkstoff hergestellt werden.

Der Flanschbereich 66 einer Verstärkungsrippe 62 kann mit Anschlüssen 74 (Figur 5) beispielsweise in der Form von Inserts versehen sein. In einen solchen Anschluss lässt sich jeweils ein Nietband 76 oder Versteifungswinkel eintauchen, welches mit dem Boden 68 fixierbar ist. Dadurch lässt sich die jeweilige Verstärkungsrippe 62 auch an dem Boden 68 fixieren. Beispielsweise kann das Nietband 76 bzw. der Versteifungswinkel aus einem Faserverbundwerkstoff hergestellt sein.

## Patentansprüche

1. Verbundstruktur, umfassend ein erstes Bauteil (12; 58) aus einem Faserverbundwerkstoff mit thermoplastischer Matrix und mindestens ein weiteres zweites Bauteil (14; 62) aus einem Faserverbundwerkstoff mit thermoplastischer Matrix, welches mit dem ersten Bauteil (12; 58) verbunden ist, wobei das zweite Bauteil (14; 62) einen Tragebereich (20; 64) aus mit Endlosfasern verstärktem Werkstoff und einen Flanschbereich (30; 66) aus kurzfaserverstärktem Werkstoff umfasst und über den Flanschbereich (30; 66) mit dem ersten Bauteil (12; 58) verbunden ist.

2. Verbundstruktur nach Anspruch 1, **dadurch gekennzeichnet, dass** der Tragebereich (20; 64) plattenförmig ausgebildet ist.

3. Verbundstruktur nach Anspruch 1 oder 2, **dadurch gekennzeichnet, dass** die Fasern im Tragebereich (20; 64) mindestens näherungsweise parallel zu einer Oberfläche (16; 18) des Tragebereichs (20; 64) orientiert sind.

4. Verbundstruktur nach einem der vorangehenden Ansprüche, **dadurch gekennzeichnet, dass** Fasern im Tragebereich (20; 64) mindestens näherungsweise parallel zueinander orientiert sind.

5. Verbundstruktur nach einem der vorangehenden Ansprüche, **dadurch gekennzeichnet, dass** das erste Bauteil (12; 58) aus mit Endlosfasern verstärktem Werkstoff hergestellt ist.

6. Verbundstruktur nach Anspruch 5, **dadurch gekennzeichnet, dass** die Endlosfasern mindestens näherungsweise parallel zu einer Oberfläche (22; 24) des ersten Bauteils (12; 58) orientiert sind.

7. Verbundstruktur nach Anspruch 5 oder 6, **dadurch gekennzeichnet, dass** Endlosfasern mindestens näherungsweise parallel zueinander liegen.

8. Verbundstruktur nach einem der vorangehenden Ansprüche, **dadurch gekennzeichnet, dass** der Flanschbereich (30; 66) und der Tragebereich (20; 64) das gleiche thermoplastische Matrixmaterial aufweisen.

9. Verbundstruktur nach einem der vorangehenden Ansprüche, **dadurch gekennzeichnet, dass** der Flanschbereich (30; 66) und das erste Bauteil (12; 58) das gleiche thermoplastische Matrixmaterial aufweisen.

10. Verbundstruktur nach einem der vorangehenden Ansprüche, **dadurch gekennzeichnet, dass** der Flanschbereich (30) eine Stirnseite (36) des Tragebereichs (20), welche dem ersten Bauteil (12) zugewandt ist, umgibt.

11. Verbundstruktur nach einem der vorangehenden Ansprüche, **dadurch gekennzeichnet, dass** eine Stirnseite (36) des Tragebereichs (20) zu dem ersten Bauteil (12) durch den Flanschbereich (30) abgedeckt ist.

12. Verbundstruktur nach einem der vorangehenden Ansprüche, **dadurch gekennzeichnet, dass** der Flanschbereich (30) einen Verbindungsbereich (44) zu dem ersten Bauteil (12) aufweist, welcher größere Breitenabmessungen aufweist als die Stirnseite (36) des Tragebereichs (20).

13. Verbundstruktur nach einem der vorangehenden Ansprüche, **dadurch gekennzeichnet, dass** der Flanschbereich (30) eine Ausnehmung (40) aufweist, in welcher der Tragebereich (20) sitzt.

14. Verbundstruktur nach Anspruch 13, **dadurch gekennzeichnet, dass** die Ausnehmung (40) zwischen parallel gegenüberliegenden Wänden (42a, 42b) gebildet ist.

15. Verbundstruktur nach einem der vorangehenden Ansprüche, **dadurch gekennzeichnet, dass** die Breite des Flanschbereichs (30) in einer Breitenrichtung parallel zu einer Dickenrichtung (26) des Tragebereichs (20) von dem ersten Bauteil (12) weg abnimmt.

16. Verbundstruktur nach einem der vorangehenden Ansprüche, **dadurch gekennzeichnet, dass** der Flanschbereich (30) eine mindestens näherungsweise trapezförmige Außenkontur aufweist.

17. Verbundstruktur nach einem der vorangehenden Ansprüche, **dadurch gekennzeichnet, dass** der Flanschbereich an einem Ende (46) zu dem Tragebereich (20) stufenförmig ausgebildet ist.

18. Verbundstruktur nach einem der vorangehenden Ansprüche, **dadurch gekennzeichnet, dass** der Faseranteil im Flanschbereich (30) kleiner als 40 % ist.

19. Verbundstruktur nach einem der vorangehenden Ansprüche, **dadurch gekennzeichnet, dass** der Flanschbereich (30; 66) bezüglich des Verbindungsbereichs (44) zu dem ersten Bauteil (12; 58) durchgängig ist.

20. Verbundstruktur nach einem der vorangehenden Ansprüche, **dadurch gekennzeichnet, dass** sich der Flanschbereich (30; 66) über eine ganze Verbindungsseite zur Verbindung des zweiten Bauteils (14; 62) mit dem ersten Bauteil (12; 58) erstreckt.

21. Verbundstruktur nach einem der vorangehenden Ansprüche, **dadurch gekennzeichnet, dass** das erste Bauteil (12; 58) und das zweite Bauteil (14; 62) über den Flanschbereich (30; 66) passgenau miteinander verbunden sind.

22. Verbundstruktur nach einem der vorangehenden Ansprüche, **dadurch gekennzeichnet, dass** in einem Verbindungsbereich (44) zwischen dem ersten Bauteil (12) und dem zweiten Bauteil (14) eine Wärmeverteilungseinrichtung (50) angeordnet ist.

23. Verbundstruktur nach Anspruch 22, **dadurch gekennzeichnet, dass** die Wärmeverteilungseinrichtung (50) durch ein oder mehrere metallische Elemente oder durch Fasern gebildet ist.

24. Verbundstruktur nach Anspruch 22 oder 23, **dadurch gekennzeichnet, dass** die Wärmeverteilungseinrichtung (50) durch ein oder mehrere Gitter gebildet ist.

25. Verbundstruktur nach einem der vorangehenden Ansprüche, **dadurch gekennzeichnet, dass** der Flanschbereich (30) auf den Tragebereich (20) mindestens teilweise aufgespritzt ist.

26. Verbundstruktur nach einem der Ansprüche 1 bis 24, **dadurch gekennzeichnet, dass** der Flanschbereich (30) auf den Tragebereich (20) aufgepresst ist.

27. Verbundstruktur nach einem der vorangehenden Ansprüche, **dadurch gekennzeichnet, dass** der Flanschbereich (30) und der Tragebereich (20) miteinander verschweißt sind.

28. Verbundstruktur nach einem der vorangehenden Ansprüche, **dadurch gekennzeichnet, dass** der Flanschbereich (30; 66) einen oder mehrere Anschlüsse (74) zur Verbindung mit einem oder mehreren Bauteilen (76) aufweist.

29. Verbundstruktur nach einem der vorangehenden Ansprüche, **dadurch gekennzeichnet, dass** der Flanschbereich (30; 66) an jeder Stelle breiter ist als der Tragebereich (20; 64) mindestens dort, wo der Tragebereich (20; 64) und der Flanschbereich (30; 66) miteinander verbunden sind.

30. Verbundstruktur nach einem der vorangehenden Ansprüche, **dadurch gekennzeichnet, dass** der Flanschbereich (30) den Tragebereich (20) umgreift.

31. Verbundstruktur nach einem der vorangehenden Ansprüche, **dadurch gekennzeichnet, dass** das erste Bauteil (58) schalenförmig ausgebildet ist.

32. Verbundstruktur nach einem der vorangehenden Ansprüche, **dadurch gekennzeichnet, dass** das zweite Bauteil eine Verstärkungsrippe (62) oder Teil einer Verstärkungsrippe (62) ist.

33. Verbundstruktur nach einem der vorangehenden Ansprüche, welche ein Slat (56) ist.

34. Verfahren zur Herstellung einer Verbindung zwischen einem ersten Bauteil aus einem Faserverbundwerkstoff mit thermoplastischer Matrix und einem zweiten Bauteil aus einem Faserverbundwerkstoff, bei dem das zweite Bauteil mit einem Flanschbereich aus kurzverstärktem Werkstoff mit thermoplastischer Matrix versehen wird und der Flanschbereich mit dem ersten Bauteil durch Schweißen verbunden wird.

35. Verfahren nach Anspruch 34, **dadurch gekennzeichnet, dass** der Flanschbereich an einem plattenförmigen Bereich aus endlosfaserverstärktem Werkstoff angeordnet wird.

36. Verfahren nach Anspruch 34 oder 35, **dadurch gekennzeichnet, dass** der Flanschbereich mindestens teilweise aufgespritzt wird.

37. Verfahren nach Anspruch 34 oder 35, **dadurch gekennzeichnet, dass** der Flanschbereich aufgepresst wird.

38. Verfahren nach einem der Ansprüche 34 bis 37, **dadurch gekennzeichnet, dass** das zweite Bauteil mit dem Flanschbereich gegen das erste Bauteil gepresst wird.

39. Verfahren nach einem der Ansprüche 34 bis 38, **dadurch gekennzeichnet, dass** zwischen dem ersten Bauteil und dem zweiten Bauteil eine Wärmeverteilungseinrichtung positioniert wird.

40. Verfahren nach Anspruch 39, **dadurch gekennzeichnet, dass** die Wärmeverteilungseinrichtung flexibel ausgebildet ist.

41. Verfahren nach einem der Ansprüche 34 bis 40, **dadurch gekennzeichnet, dass** das erste Bauteil und/oder das zweite Bauteil zum Verschweißen der beiden Bauteile miteinander erwärmt wird.
